# EUROPÄISCHE PATENTANMELDUNG

(11) **EP 1 950 536 A2**
(43) Veröffentlichungstag der Anmeldung: **30.07.2008**
(21) Anmeldenummer: 07120077.8
(22) Anmeldetag: 06.11.2007
(51) Int. Cl.: G01F 15/06

(54) **Schnittstellenadapter**

(30) Priorität: 27.11.2006 DE 102006055897; 27.11.2006 DE 102006055898; 27.11.2006 DE 102006055900; 27.11.2006 US 861232 P; 27.11.2006 US 861233 P; 27.11.2006 US 861234 P
(71) Anmelder: VEGA Grieshaber KG, 77709 Wolfach (DE)
(72) Erfinder: Guenter, Klaus, 78733, Aichhalden (DE); Deck, Thomas, 77709, Wolfach (DE); Fehrenbach, Josef, 77716, Haslach (DE)
(74) Vertreter: Kopf, Korbinian Paul

(57) **Zusammenfassung**

Feldgeräte zum Messen eines Drucks oder eines Füllstands sind Über eine Kabel- oder eine Funkverbindung mit stationär angeordneten Auswerte- und Anzeigegeräten verbunden. Gemäß einem Ausführungsbeispiel der vorliegenden Erfindung ist ein Parametrierungs- und Datenaufzeiclmungssystem für ein Feldgerät angegeben, welches eine schnelle und flexible Kommunikation zwischen Feldgeräten und einem mobilen Bediengerät ermöglicht. Hierfür weist das System eine Anschlussbox und einen Schnittstellenadapter auf, welcher ein HART- oder I²C-Signal in ein USB-Signal wandelt.

## Beschreibung

### Technisches Gebiet

Die Erfindung betrifft das technische Gebiet der Füllstandmessung und Druckmessung. Insbesondere betrifft die Erfindung einen Schnittstellenadapter für ein Parametrierungs- und Datenautzeichnungssystem für ein Feldgerät, ein Parametrierungs- und Datenanfzeichnungssystem für ein Feldgerät, die Verwendung eines derartigen Parametrierungs- und Datenaufzeichnungssystems und ein Verfahren zur Übertragung von einem Signal zwischen einem Feldgerät und einem Bediengerät mit einem derartigen Parametrierungs- und Datenaufzeichnungssystem.

### Hintergrund der Erfindung

Zur Messung eines Füllstands von Flüssigkeiten und Feststoffen in Behaltern wird ein Füllstandmessgerät üblicherweise an oder in der Behälterwand montiert. Das Füllstandmessgerät sendet anschließend Wellen entweder geführt durch einen Wellenleiter oder abgestrahlt durch eine Antenneneinrichtung in Richtung des Füllgutes. Die am Füllgut reflektierten Wellen werden abschließend von der Messvorrichtung wieder empfangen. Aus der daraus entwickelbaren Laufzeit ergibt sich der Abstand zwischen dem Sensor und dem Füllgut und aus der Kenntnis der relativen Position des Sensors zum Behälterboden die gesuchte Füllhöhe.

Die gemessenen Daten werden, ggf. nach einer Zwischenspeicherung und/oder Vorabauswertung, an ein Bedien- oder Auswertegerät übertragen. Auch kann es sich bei dem Gerät um eine bloße Anzeigeeinrichtung handeln. Im Gegenzug dazu können die Feldgeräte über das Bediengerät parametriert oder zu einer Messung veranlasst (getriggert) werden. Für diesen bidirektionalen Datenaustausch sind Datenübertragungswege notwendig, über welche die Feldgeräte mit den Bediengeräten, Auslesegeräten oder Anzeigegeräten gekoppelt sind.

Die einzelnen Komponenten Feldgerät und Auswerte-/Anzeigegerät bzw. Bediengerät sind in der Regel fest installiert. Das Feldgerät befindet sich beispielsweise am Deckel eines hohen Füllgutbehälters und ist über ein Datenkabel mit einem in einem Kontrollraum angeordneten Auswerte-/Anzeigegerät verbunden. Eine Geräteparametrierung oder ein Ablesen der Messdaten ist somit nur direkt am Feldgerät oder im Kontrollraum möglich.

### Darstellung der Erfindung

Es ist eine Aufgabe der vorliegenden Erfindung, eine schnelle und flexible Kommunikation zwischen dem Feldgerät und einem mobilen Bediengerät bereitzustellen.

Gemäß einem Ausführungsbeispiel der Erfindung ist ein Parametrierungs- und Datenaufzeichnungssystem für ein Feldgerät angegeben, welches eine Anschlussbox und einen Schnittstellenadapter mit einer Feldgeräteschnittstelle zum Anschluss an die Anschlussbox aufweist, wobei der Schnittstellenadapter und die Anschlussbox zur Übertragung von Daten zwischen dem Feldgerät und einem mobilen Bediengerät ausgeführt sind, und wobei das Feldgerät ein Füllstandmessgerät oder ein Druckmessgerät ist.

In anderen Worten kann das erfindungsgemäße Parametrierungs- und Datcnaufzeichnungssystem direkt an das Feldgerät oder zumindest an eine Datenleitung, die zum Beispiel vom Feldgerät zum Kontrollraum oder einen anderswo angeordneten externen Auswertegerät führt, angeschlossen werden bzw. die Funkstrecke zwischen dem Feldgerät und dem externen Auswertegerät anzapfen. Der Schnittstellenadapter des Systems ist an das mobile Bediengerät anschließbar, so dass über das Parametrierungs- und Datenaufzeichnungssystem mobil mit dem Feldgerät kommuniziert werden kann. Beispielsweise können auf diese Weise Daten aus dem Feldgerät ausgelesen werden, die dann beispielsweise im Parametrierungs- und Datenaufzeichnungssystem gespeichert werden oder/und an das mobile Bediengerät weitergeleitet werden.

### Auf diese Weise kann die Datenleitung zwischen dem Feldgerät und externen

Auswerte-/Anzeigegeräten oder einer Bedieneinheit angezapft werden, um eine Kommunikation bzw. einen Datenaustausch mit dem Feldgerät vor Ort zu ermöglichen. Ein Servicetechniker muss dann nicht erst den Füllgutbehälter oder Tank hinaufklettern oder sich in den Kontrollraum begeben. Vielmehr kann er mit Hilfe seiner kleinen Anschlussbox und dem Schnittstellenadapter, welche in verschiedenen Größen und Formen ausgeführt sein kann und beispielsweise einfach in einer Hemdtasche mitgetragen werden kann, den Datenpfad zwischen dem Feldgerät und beispielsweise dem Kontrollraum direkt auf einfache Weise anzapfen.

Gemäß einem weiteren Ausführungsbeispiel der vorliegenden Erfindung ist der Schnittstellenadapter für die Datenübertragung zur Wandelung eines Signals vom Feldgerät in ein USB-Signal für das Bediengerät ausgeführt. Bei dem Signal vom Feldgerät handelt es sich um ein HART-Signal, ein I²C-Signal, ein Profibus-Signal, ein Fieldbus Foundation Signal, ein 4...20mA-Signal, ein VEGA VBUS-Signal oder um ein Schaltsignal.

Der Schnittstellenadapter kann also dafür eingesetzt werden, das Messsignal vom Feldgerät in ein USB-Signal umzuwandeln. Hierdurch wird ein schneller und flexibler Datenaustausch ermöglicht. Natürlich kann, je nach Auslegung des Schnittstellenadapters, auch eine Umwandlung in ein anderes Signalformat erfolgen. Wichtig ist hierbei, dass das Ausgangssignal beispielsweise von einem Laptop entgegengenommen werden kann.

Kommuniziert also das Feldgerät mit der Außenwelt über beispielsweise ein HART-Signal oder I²C-Signal, kann das Parametrierungs- und Datenaufzeichnungssystem an den Signalweg angeschlossen werden (diesen also anzapfen). Der Schnittstellenadapter ermöglicht dann einen weiterführenden Anschluss beispielsweise an einen PC oder ein Laptop, z. B. über die USB-Schnittstelle.

Gemäß einem weiteren Ausführungsbeispiel der vorliegenden Erfindung weisen die zu übertragenden Daten Parametrierungsdaten zur Parametrierung für das Feldgerät auf, wobei das System zur Übertragung der Parametrierungsdaten von dem Bediengerät über den Schnittstellenadapter und die Anschlussbox an das Feldgerät ausgeführt ist.

Auf diese Weise kann das Parametrierungs- und Datenaufzeichnungssystem zur Feldgeräteparametrierung eingesetzt werden. Eine Parametrierung vom Kontrollraum aus oder direkt am Feldgerät ist nicht mehr erforderlich.

Gemäß einem weiteren Ausführungsbeispiel der vorliegenden Erfindung weisen die zu übertragenden Daten Messdaten des Feldgeräts auf, wobei das System zur Übertragung der Messdaten von dem Feldgerät über die Anschlussbox und den Schnittstellenadapter an das Bediengerät ausgeführt ist.

In anderen Worten kann das Parametrierungs- und Datenaufzeichnungssystem also zum Auslesen des Feldgeräts eingesetzt werden. Hierfür kann das System einen Speicherbaustein aufweisen, welcher die Messwerte zwischenspeichert. Dieser Speicherbaustein ist beispielsweise im Schnittstellenadapter angebracht. Der Schnittstellenadapter kann zum Auslesen beispielsweise von der Anschlussbox abgenommen werden und (wie ein sog. "Memory-Stick") zu einem späteren Zeitpunkt an einen Computer angeschlossen werden.

Gemäß einem weiteren Ausführungsbeispiel der vorliegenden Erfindung weist der Schnittstellenadapter eine Bediengeräteschnittstelle auf, wobei die Bediengeräteschnittstelle zum Anschluss des Schnittstellenadapters an das Bediengerät ausgebildet ist und wobei die Anschlussbox einen Feldgeräteanschluss zum Anschluss der Box an das Feldgerät aufweist.

Bei der Bediengeräteschnittstelle handelt es sich beispielsweise um eine USB-Schnittstelle.

Gemäß einem weiteren Ausführungsbeispiel der vorliegenden Erfindung weist die Anschlussbox einen ersten Schnittstellenanschluss zum direkten Anschluss der Box an den Schnittstellenadapter auf.

Box und Schnittstellenadapter können somit direkt miteinander verbunden werden. Hierfür kann die Box entsprechende Verbindungselemente aufweisen, welche in entsprechende Verbindungselemente des Schnittstellenadapters eingreifen, so dass ein einfaches Anbringen und Lösen des Schnittstellenadapters von der Box gewährleistet ist. Hierbei kann es sich beispielsweise um einen schraubartigen Verschließmechanismus oder einen Klickmechanismus handeln.

Gemäß einem weiteren Ausführungsbeispiel der vorliegenden Erfindung weist die Anschlussbox einen zweiten Schnittstellenanschluss zum direkten Anschluss der Box an ein Anzeige- und Bediengerät auf.

Es kann also nicht nur der Schnittstellenadapter an die Box angeschlossen werden, sondern auch ein zusätzliches Anzeige- und Bediengerät, beispielsweise ein sog. "PLICSCOM" der Firma VEGA. Auf diese Weise kann das Parametrierungs- und Datenaufzeichnungssystem zur Datenspeicherung, zum Datenauslesen und zur Weitergabe an einen PC oder ein Laptop eingesetzt werden.

Weiterhin kann, gemäß einem weiteren Ausführungsbeispiel der vorliegenden Erfindung, der Feldgeräteanschluss zum Anschluss an eine HART-Leitung ausgeführt sein.

Weiterhin weist, gemäß einem weiteren Ausführungsbeispiel der vorliegenden Erfindung, der Feldgeräteanschluss der Anschlussbox zum Anschluss an die HART-Leitung ein HART-Kabel mit zwei Anschlusssteckern auf.

Mit Hilfe der beiden Anschlussstecker kann das HART-Kabel angezapft werden. Alternativ kann das Signal auch direkt am Feldgerät oder direkt an der Auswerteeinheit im Kontrollraum abgegriffen werden.

Somit ist ein äußerst flexibler Zugriff auf die Signalleitung zur Parametrierung oder zum Auslesen des Feldgeräts bereitgestellt.

Gemäß einem weiteren Ausführungsbeispiel der vorliegenden Erfindung ist der Feldgeräteanschluss zum Anschluss an einen I²C-Bus ausgeführt.

Gemäß einem weiteren Ausführungsbeispiel der vorliegenden Erfindung weist der Feldgeräteanschluss zum Anschluss an den I²C-Bus ein I²C-Bus-Kabel auf.

Beispielsweise kann, gemäß einem weiteren Ausführungsbeispiel der vorliegenden Erfindung, die Box sowohl das HART-Kabel als auch das I²C-Bus-Kabel aufweisen.

I²C oder I2C oder IIC (für Inter-Integrated Circuit) ist ein serieller Bus für Computersysteme. Er kann beispielsweise benutzt werden, um Geräte an ein Embedded System oder eine Hauptplatine anzuschließen.

Das HART-Protokoll (Highway Addressable Remote Transmitter) kann insbesondere als ein offenes Master-Slave-Protokoll für busadressierbare Feldgeräte bezeichnet werden. Es kann eine Methode implementieren, Daten mittels Frequency Shift Keying (FSK), aufgesetzt auf dem 4...20mA-Prozesssignal, zu übertragen, um Fernkonfigurationen und Diagnoseüberprüfung zu ermöglichen.

Sowohl I²C als auch HART eignen sich als Protokoll zur Kommunikation mit einem Feldgerät, z. B. mit einem Füllstandsmessgerät oder mit einem Druckmessgerät.

Bei einem HART-Signal, das dem HART-Protokoll entspricht, handelt es sich um ein digitales Signal zur Übertragung von Messwerten und/oder Parametern. Das digitale HART-Signal ist auf ein 4...20mA-Signal aufmoduliert. Folglich lässt sich das digitale Signal parallel zu dem analogen 4...20mA-Signal übertragen. Findet eine solche parallele Übertragung von analogen und digitalen Signalen statt, kann an einem HART-Bus nur ein Feldgerät angeschlossen sein.

Andererseits können in einem sog. Multi-Drop-Modus bis zu 15 digitale Feldgeräte an einen HART-Bus angeschlossen sein. Der analoge Strom ist dabei im Wesentlichen auf 4 mA eingestellt. Die Feldgeräte tauschen im Multi-Drop-Modus ein digital codiertes Signal aus. Bei dem digitalen Signal handelt es sich um ein frequenzmoduliertes Signal, wobei das frequenzmodulierte Signal beispielsweise die beiden Frequenzen 1200 Hz und 2200 Hz einnehmen kann.

Feldgeräte im Sinne dieser Anmeldungen können jede Art von Messgeräten sein, beispielsweise Füllstandmessgeräte, Druckmessgeräte, Grenzstanderfassungsmessvorrichtungen oder Temperaturmessvorrichtungen, um nur einige Beispiele zu nennen. Zur Erfassung können dabei unterschiedliche physikalische Effekte ausgenutzt werden. Die Messwerterfassung kann mit Hilfe von Radarstrahlen, Ultraschall, Vibration, geführter Mikrowelle (TDR, Time Domain Reflexion) oder kapazitiven Effekten erfolgen.

Gemäß einem weiteren Ausführungsbeispiel der vorliegenden Erfindung weist der Feldgeräteanschluss einen Adapterstecker zum Anschluss an ein Serie 50-Gerät der Firma VEGA auf.

Somit können auch ältere Geräte an die Box angeschlossen werden.

Gemäß einem weiteren Ausführungsbeispiel der vorliegenden Erfindung ist der Adapterstecker derart codiert, dass ein falsches Anschließen des Adaptersteckers an das Serie 50-Gerät verhindert wird. Beispielsweise kann aufgrund der Steckercodierung der Stecker nicht um 180° verdreht eingesteckt werden. Eine entsprechende Codierung kann sich auch auf der anderen Seite des Steckers befinden, welche den Stecker mit den I²C-Kabel der Anschlussbox verbindet.

Gemäß einem weiteren Ausführungsbeispiel der vorliegenden Erfindung weist die Anschlussbox eine Energieversorgung zur autarken Versorgung des Schnittstellenadapters mit elektrischer Energie auf.

Bei der Energieversorgung kann es sich beispielsweise um eine Batterie handeln. Auch kann, gemäß einem weiteren Ausführungsbeispiel der Erfindung, ein aufladbarer Akku vorgesehen sein, der entweder extern aufladbar ist oder beispielsweise an ein Solarzellenmodul der Anschlussbox gekoppelt ist. Auf diese Weise kann der Akkumulator bei Lichteinstrahlung aufgeladen werden, ohne dass eine externe Energieversorgung notwendig ist. Diese Ausführungsform eignet sich insbesondere zum Einsatz in Gegenden, in denen für längere Zeit nicht auf eine Energieversorgung zum Aufladen des Akkus zurückgegriffen werden kann.

Gemäß einem weiteren Ausführungsbeispiel der vorliegenden Erfindung weist die Anschlussbox einen von außen zugänglichen Hohlraum auf, der zur Lagerung von einem HART-Kabel, einem I²C-Bus-Kabel, einem USB-Kabel und einem Adapterstecker ausgeführt ist.

Beispielsweise ist die Anschlussbox aufklappbar gestaltet und weist in ihrem Inneren entsprechende Haltevorrichtungen, wie beispielsweise Klettverschlüsse oder Gummibänder, auf, durch welche die Kabel fixiert werden können. Durch Zuklappen der Anschlussbox sind die Kabel vor äußeren Einflüssen, wie Feuchtigkeit und dergleichen, geschützt. Vor Ort kann der Servicetechniker dann die Anschlussbox einfach aufklappen und das entsprechende Kabel herausnehmen, um die Datenleitung anzuzapfen.

Gemäß einem weiteren Ausführungsbeispiel der vorliegenden Erfindung weist das Parametrierungs- und Datenaufzeichnungssystem eine Funkschnittstelle zum drahtlosen Übertragen des Signals zwischen dem System und dem Feldgerät auf.

Die Anschlussbox weist also beispielsweise ein Funkmodul auf, über welches eine Kommunikation zwischen dem Feldgerät und dem System bereitgestellt wird. Beispielsweise erfolgt die Funkkommunikation über WLAN (Wireless Local Area Network), ISM (durch welches eine große Reichweite von etwa einem Kilometer ermöglicht wird), Bluetooth oder ZIGBEE. Es sind auch andere Übertragungsprotokolle möglich.

Gemäß einem weiteren Ausführungsbeispiel der vorliegenden Erfindung weist der Schnittstellenanschluss Schleifkontakte zum Anschluss der Box an den Schnittstellenadapter auf.

Auf diese Weise kann der Schnittstellenadapter durch eine einfache Schraubbewegung an den Schnittstellenanschluss angeschlossen werden.

Gemäß einem weiteren Ausführungsbeispiel der vorliegenden Erfindung weist das Parametrierungs- und Datenaufzeichnungssystem einen zweiten Schnittstellenanschluss zum Anschluss der Box an ein Bediengerät auf.

Gemäß einem weiteren Ausführungsbeispiel der vorliegenden Erfindung ist ein Schnittstellenadapter für ein Parametrierungs- und Datenaufzeichnungssystem angegeben, welcher eine Feldgeräteschnittstelle zum Anschluss des Schnittstellenadapters an ein Feldgerät aufweist. Weiterhin weist der Schnittstellenadapter eine Bediengeräteschnittstelle zum Anschluss des Schnittstellenadapters an ein mobiles Bediengerät auf, wobei der Schnittstellenadapter zur Übertragung von Daten zwischen dem Feldgerät und dem mobilen Bediengerät ausgeführt ist und wobei das Feldgerät ein Füllstandmessgerät oder ein Druckmessgerät ist.

Ein derartiger Schnittstellenadapter ermöglicht eine schnelle und flexible Kommunikation zwischen dem Feldgerät und einem mobilen Bediengerät.

Gemäß einem weiteren Ausführungsbeispiel der vorliegenden Erfindung ist der Schnittstellenadapter für die Datenübertagung zur Wandelung eines Signals vom Feldgerät in ein USB-Signal für das Bediengerät ausgeführt. Bei dem Feldgerätesignal handelt es sich beispielsweise um ein HART-Signal, ein I²C-Signal, ein Profibus-Signal, ein Fieldbus Foundation Signal, ein 4...20 mA Signal, ein VEGA VBUS-Signal, oder ein Schaltsignal. Somit kann der Schnittstellenadapter zum Anschluss eines Laptops an den Kommunikationsweg zwischen Feldgerät und Kontrollraum dienen.

Gemäß einem weiteren Ausführungsbeispiel der vorliegenden Erfindung weist der Schnittstellenadapter weiterhin einen Speicher zum Zwischenspeichern der zu übertragenden Daten auf.

Gemäß einem weiteren Ausführungsbeispiel der vorliegenden Erfindung weist der Schnittstellenadapter weiterhin eine Anzeige- und Bedieneinheit auf, welche in den Schnittstellenadapter integriert ist.

Der Schnittstellenadapter kann also einerseits Messdaten an das Laptop oder beispielsweise auch ein PDA übertragen. Andererseits können die Daten über den Schnittstellenadapter direkt dem Benutzer angezeigt werden und im Schnittstellenadapter gespeichert werden.

Gemäß einem weiteren Ausführungsbeispiel der vorliegenden Erfindung weisen die Daten Parametrierungsdaten zur Parametrierung für das Feldgerät auf, wobei der Schnittstellenadapter zur Übertragung der Parametrierungsdaten von dem Bediengerät an das Feldgerät ausgeführt ist.

Gemäß einem weiteren Ausführungsbeispiel der vorliegenden Erfindung weisen die Daten Messdaten des Feldgeräts auf, wobei der Schnittstellenadapter zur Übertragung der Messdaten von dem Feldgerät an das Bediengerät ausgeführt ist.

Gemäß einem weiteren Ausführungsbeispiel der vorliegenden Erfindung weist der Schnittstellenadapter eine Funkschnittstelle zum drahtlosen Übertragung des Signals zwischen dem Schnittstellenadapter und dem Feldgerät auf.

Gemäß einem weiteren Ausführungsbeispiel der vorliegenden Erfindung weist der Schnittstellenadapter Federkontakte zum Anschluss an das Feldgerät auf.

Gemäß einem weiteren Ausführungsbeispiel der vorliegenden Erfindung ist die Verwendung eines Parametrierungs- und Datenaufzeichnungssystems zur Übertragung von einem Signal zwischen einem Feldgerät und einem Bediengerät angegeben, wobei das Feldgerät ein Füllstandmessgerät oder ein Druckmessgerät ist.

Weiterhin ist ein Verfahren zur Übertragung von einem Signal zwischen einem Feldgerät und einem Bediengerät mit einem Parametrierungs- und Datenaufzeichnungssystem angegeben, bei dem der Schnittstellenadapter, welcher eine Feldgeräteschnittstelle aufweist, an eine Anschlussbox angeschlossen wird und Daten zwischen dem Feldgerät und dem Bediengerät über den Schnittstellenadapter und die Anschlussbox übertragen werden.

Auch hier handelt es sich bei dem Feldgerät um ein Füllstandmessgerät oder ein Druckmessgerät.

Im Folgenden werden mit Verweis auf die Figuren bevorzugte Ausführungsbeispiele der vorliegenden Erfindung beschrieben.

### Kurze Beschreibung der Zeichnungen

Fig. 1 zeigt ein Parametrierungs- und Aufzeichnungssystem gemäß einem Ausführungsbeispiel der vorliegenden Erfindung.

Fig. 2 zeigt ein Parametrierungs- und Aufzeichnungssystem gemäß einem weiteren Ausführungsbeispiel der vorliegenden Erfindung.

Fig. 3 zeigt ein Parametrierungs- und Aufzeichnungssystem gemäß einem weiteren Ausführungsbeispiel der vorliegenden Erfindung.

Fig. 4 zeigt ein Parametrierungs- und Aufzeichnungssystem gemäß einem weiteren Ausführungsbeispiel der vorliegenden Erfindung.

Fig. 5 zeigt ein Parametrierungs- und Aufzeichnungssystem gemäß einem weiteren Ausführungsbeispiel der vorliegenden Erfindung.

Fig. 6 zeigt ein Parametrierungs- und Aufzeichnungssystem gemäß einem weiteren Ausführungsbeispiel der vorliegenden Erfindung.

Fig. 7 zeigt ein Parametrierungs- und Aufzeichnungssystem gemäß einem weiteren Ausführungsbeispiel der vorliegenden Erfindung.

Fig. 8 zeigt ein Parametrierungs- und Aufzeichnungssystem gemäß einem weiteren Ausführungsbeispiel der vorliegenden Erfindung,

Fig. 9 zeigt ein Parametrierungs- und Aufzeichnungssystem gemäß einem weiteren Ausführungsbeispiel der vorliegenden Erfindung.

Fig. 10 zeigt ein Parametrierungs- und Aufzeichnungssystem gemäß einem weiteren Ausführungsbeispiel der vorliegenden Erfindung.

Fig. 11 zeigt ein Parametrierungs- und Aufzeichnungssystem gemäß einem weiteren Ausführungsbeispiel der vorliegenden Erfindung.

Fig. 12 zeigt ein Parametrierungs- und Aufzeichnungssystem gemäß einem weiteren Ausführungsbeispiel der vorliegenden Erfindung.

Fig. 13 zeigt ein Parametrierungs- und Aufzeichnungssystem gemäß einem weiteren Ausführungsbeispiel der vorliegenden Erfindung.

Fig. 14 zeigt ein Parametrierungs- und Aufzeichnungssystem gemäß einem weiteren Ausführungsbeispiel der vorliegenden Erfindung.

Fig. 15 zeigt einen Adapterstecker gemäß einem Ausführungsbeispiel der vorliegenden Erfindung in vier unterschiedlichen perspektivischen Ansichten.

Fig. 16 zeigt den Adapterstecker der Fig. 15 in vier weiteren Ansichten gemäß einem Ausführungsbeispiel der vorliegenden Erfindung.

Fig. 17 zeigt drei schematische Darstellungen des Schnittstellenanschlusses mit Schleifkontakten oder Federkontakten gemäß einem Ausführungsbeispiel der vorliegenden Erfindung.

Fig. 18 zeigt eine schematische Detailansicht der Federkontakte des Sesors gemäß einem Ausführungsbeispiel der vorliegenden Erfindung.

Fig. 19 zeigt eine schematische Darstellung der Anschlussbox, von vier verschiedenen Richtungen aus betrachtet gemäß einem weiteren Ausführungsbeispiel der vorliegenden Erfindung.

Fig. 20 zeigt drei weitere schematische Darstellungen der Anschlussbox 100 in aufgeklapptem Zustand gemäß einem Ausführungsbeispiel der vorliegenden Erfindung.

Fig. 21 zeigt die Anschlussbox in drei weiteren schematische Darstellungen und mit einem I²C-Bus-Kabel und einem Anschlussstecker gemäß einem Ausführungsbeispiel der vorliegenden Erfindung.

Fig. 22 zeigt eine schematische Darstellung einer Anschlussbox gemäß einem Ausführungsbeispiel der vorliegenden Erfindung.

Fig. 23 zeigt ein Blockschaltbild einer Anschlussbox gemäß einem Ausführungsbeispiel der vorliegenden Erfindung.

Fig. 24 zeigt ein Blockschaltbild eines Schnittstellenadapters gemäß einem Ausführungsbeispiel der vorliegenden Erfindung.

Fig. 25 zeigt eine weitere Anwendung des Schnittstellenadapters gemäß einem weiteren Ausführungsbeispiel der vorliegenden Erfindung.

Fig. 26 zeigt eine weitere Anwendung einer Sensorparametrierung oder Sensordatenaufzeichnung über Funk.

Fig. 27 zeigt eine weitere Anwendung des Schnittstellenadapters gemäß einem weiteren Ausführungsbeispiel der vorliegenden Erfindung.

### Detaillierte Beschreibung von exemplarischen Ausführungsformen

Die Darstellungen in den Figuren sind schematisch und nicht maßstäblich.

In der folgenden Figurenbeschreibung werden für die gleichen oder ähnlichen Elemente die gleichen Bezugsziffern verwendet.

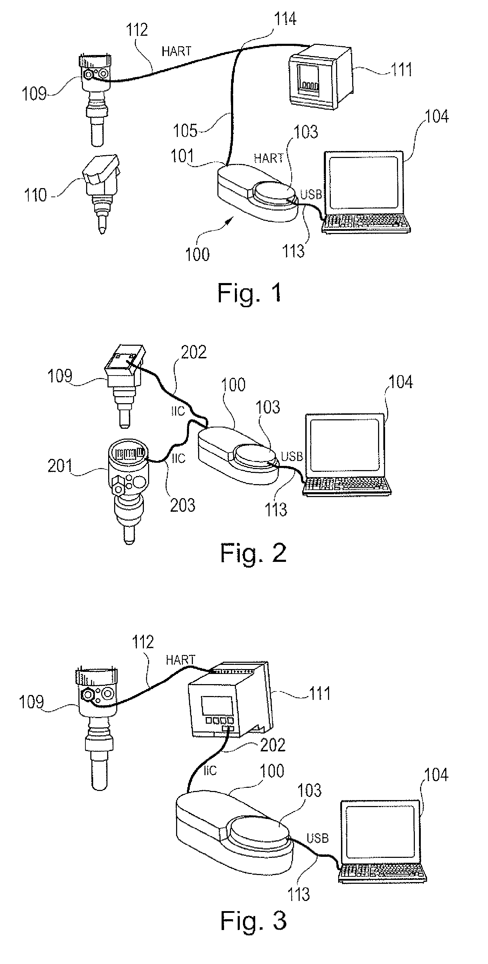

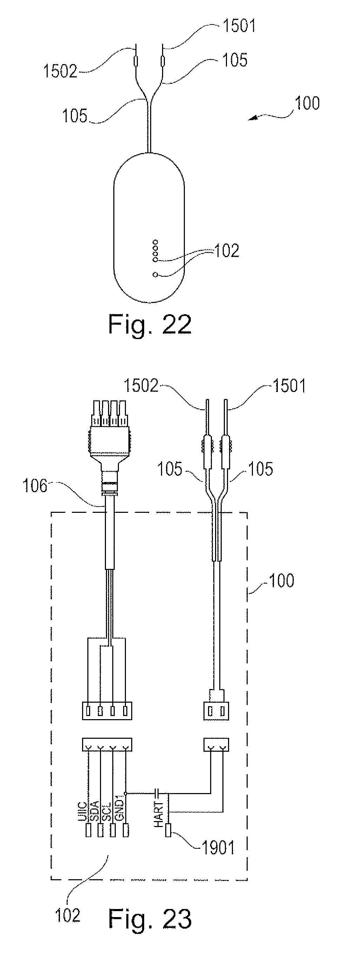

Fig. 1 zeigt eine schematische Darstellung eines Parametrierungs- und Datenaufzeichnungssystems gemäß einem Ausführungsbeispiel der vorliegenden Erfindung. Die Anschlussbox 100 weist einen Feldgeräteanschluss 101 zum Anschluss der Box an das Feldgerät 109 auf. Der Anschluss der Box 100 an das Feldgerät 109 kann beispielsweise direkt am Feldgerät oder am Datenkabel 112 beispielsweise in Form einer Anzapfung 114 erfolgen. Hierfür ist ein Anschlusskabel 105 vorgesehen (siche Figs. 22 und 23).

Bei der Datenleitung 112 zwischen dem Feldgerät 109 und dem Auswerte- und Anzeigegerät 111 handelt es sich um ein sog. HART-Kabel. Hierfür weist das HART-Anschlusskabel 105 beispielsweise zwei Stecker oder Klemmen auf, über welche eine Ankopplung an das Datenkabel 112 ermöglicht wird. Die Auswerte-/Anzeigeeinheit 111 ist beispielsweise im Kontrollraum angeordnet und dient u. a. der Energieeinspeisung. Auf die Oberseite des Feldgeräts 109 kann ein zusätzliches Anzeigegerät angebracht werden. Hierbei handelt es sich beispielsweise um ein sog. PLICSCOM-Gerät der Firma VEGA.

Die Anzapfung oder Kopplung der Datenleitung 112 kann auch am Speisegerät (parallel zum HART-Kabel 112) erfolgen. Über die Anschlussleitung 105 ist ein bidirektionaler Datenaustausch möglich. Das Feldgerät kann also einerseits parametriert werden. Andererseits können Messwerte ausgelesen werden. Natürlich ist auch der Anschluss an weitere Feldgeräte 110 möglich.

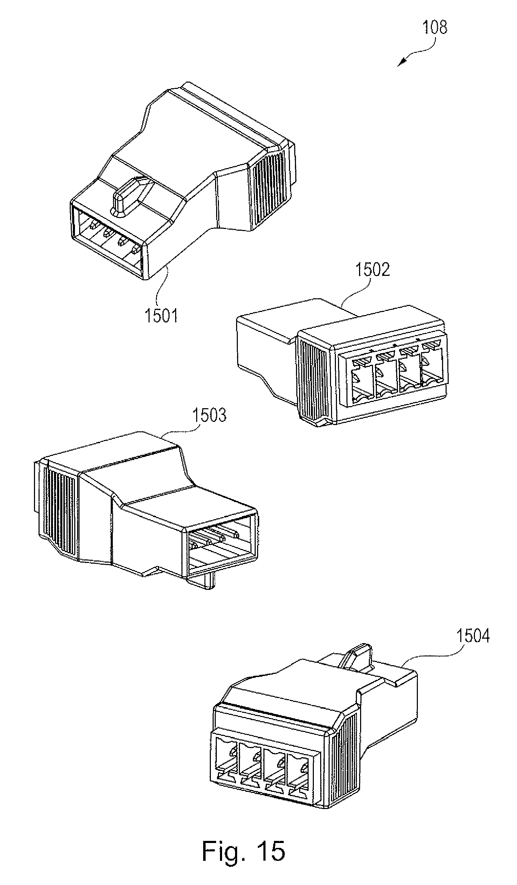

Die Parametrierung des HART-Sensors 109 erfolgt über die HART-Leitungen 112, 105 beispielsweise mit PACTware. PACTware ist eine hersteller- und feldbusunabhängige Software zur Bedienung von Feldgeräten. Die Anschlussbox 100 dient als mechanischer Adapter zwischen der HART-Leitung 112 und einer Bedieneinheit 104. Bei der Bedieneinheit 104 handelt es sich beispielsweise um einen Personal Computer (PC), oder aber um ein Laptop, ein PDA, ein Mobiltelefon, oder anderen Kommunikationseinrichtungen. Die Bedieneinheit 104 kann die einzige Bedieneinheit sein oder als Alternative zum Gerät 111 dienen. Zur Kommunikation zwischen dem Feldgerät 109 und der Bedieneinheit 104 ist eine USB-Leitung 113 vorgesehen, welche die Bedieneinheit 104 mit einem Schnittstellenadapter 103 verbindet. Der Schnittstellenadapter 103 ist an den Schnittstellenanschluss 102 (siehe Fig. 15) der Anschlussbox angeschlossen.

Die Messwertübertragung kann entweder analog (das heißt über eine 4...20mA Schleife) oder digital im sog. Multi-Drop-Verfaizren erfolgen.

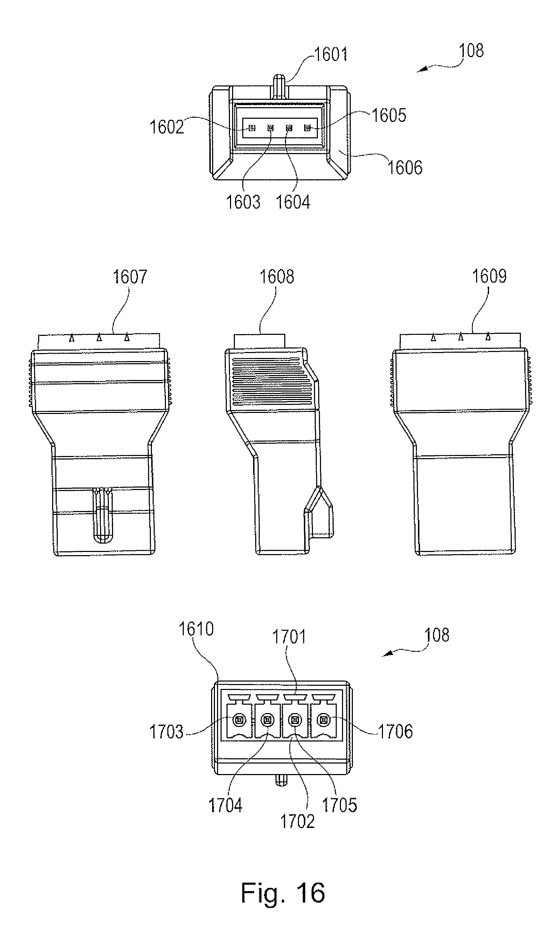

Fig. 2 zeigt eine schematische Darstellung eines Parametrierungs- und Datenaufzeichnungssystems gemäß einem weiteren Ausführungsbeispiel der vorliegenden Erfindung. Hier ist die Anschlussbox 100 über entsprechende I²C-Leitungen 202, 203 direkt an die Feldgeräte 109, 201 angeschlossen. Bei dem Gerät 201 handelt es sich beispielsweise um ein Feldgerät, auf welches der Schittstellenadapter 103 nicht direkt aufgesetzt werden kann (beispielsweise ein sog. Serie 50-Gerät der Firma VEGA). Hierfür wird ein Adapterstecker 108 (siehe Fig. 15 und 16) verwendet. Der Adapterstecker 108 ermöglicht die Ankopplung der I²C-Leitung 203 der Anschlussbox 100 direkt an den Geräteanschluss des Serie 50-Geräts 201. Bei anderen Geräten kann ein Schnittstellenadapter auf die Feldgeräteschnittstelle aufgesetzt werden, an welchen dann das USB-Kabel 113 eingesteckt werden kann.

Der Schnittstellenadapter 103 ist beispielsweise über die Anschlussbox 100 und die I²C-Buchse des Feldgeräts 201 mit dem Feldgerät 201 verbunden. Die Länge des I²C-Kabels 201 kann bis zu 25 m betragen. Natürlich kann das Kabel aber auch länger ausgeführt sein.

Auch ist es möglich, den Schnittstellenadapter ohne die Verwendung eines Datenkabels direkt auf den Sensor aufzustecken. Die Verwendung des Datenkabels ist aber beispielsweise dann vorteilhaft, wenn das Feldgerät nicht frei zugänglich ist oder nur mit erhöhtem Aufwand zugänglich ist, weil es sich beispielsweise in großer Höhe oder weit entfernt befindet.

Fig. 3 zeigt eine schematische Darstellung eines Parametrierungs- und Datenaufzeichnungssystems gemäß einem weiteren Ausführungsbeispiel der vorliegenden Erfindung. Es ist ein Feldgerät 109 vorgesehen, welches über eine HART-Leitung 112 mit einem Speise- und Bediengerät 111 kommuniziert. An das Speise- und Bediengerät 111 sind mehrere Feldgeräte parallel anschließbar (beispielsweise bis zu fünf Feldgeräte). Das Speise-und Bediengerät 111 weist beispielsweise eine sog. SPS-Funktion (speicherprogrammierte Steuerung) auf und ist internetfähig.

Bei dem Gerät 111 handelt es sich beispielsweise um ein MET der Fa. VEGA. Die Anschlussbox 100 ist über die I²C-Leitung 202 an das Speise- und Bediengerät 111 angeschlossen und kann einerseits zur Parametrierung des Speise- und Bediengeräts 111 und andererseits zum Zugriff bzw. zur Abfrage des Sensors 109 eingesetzt werden.

Auch ist eine Parametrierung des Sensors 109 möglich. Hierfür ist die Anschlussbox 100 über den Schnittstellenadapter 103 und die USB-Leitung 113 an ein Laptop 104 oder ein anderes Kommunikationsgerät bzw. Eingabe/Ausgabegerät angeschlossen.

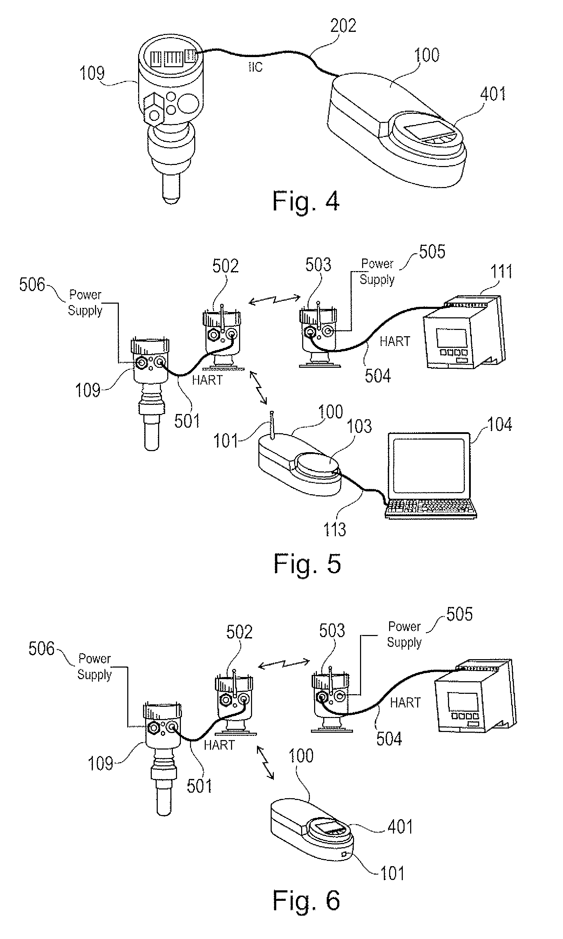

Fig. 4 zeigt eine schematische Darstellung eines Parametrierungs- und Datenaufzeichnungssystems gemäß einem weiteren Ausführungsbeispiel der vorliegenden Erfindung. Wie in Fig. 4 zu erkennen, ist die Anschlussbox 100 über eine I²C-Leitung 202 an den Füllstandsensor 109 angeschlossen. Ein Anzeige- und Bediengerät 401 ist direkt auf der Anschlussbox 100 montiert, also am Schnittstellenanschluss 102 angeschlossen. Auf diese Weise wird eine abgesetzte, mobile Bedieneinheit bereitgestellt.

Bei einer autarken Energieversorgung des Anzeige- und Bediengeräts 401, beispielsweise durch eine Batterie innerhalb der Anschlussbox 100, ist auch ein Anschluss an einen HART-Ausgang des Feldgeräts 109 möglich.

Fig. 5 zeigt eine schematische Darstellung eines Parametrierungs- und Datenaufzeichnungssystems gemäß einem weiteren Ausführungsbeispiel der vorliegenden Erfindung. Es handelt sich hier um eine kabellose Funkübertragung zur Parametrierung des Sensors 109. Hierfür ist der Sensor 109 über HART-Leitung 501 mit einem Funkmodul 502 verbunden, welches an eine Energieversorgung 506 angeschlossen ist und somit den Sensor 109 mit Energie versorgt. Das Funkmodul kann mit einem zweiten Funkmodul 503 kabellos kommunizieren. Das zweite Funkmodul 503 weist ebenfalls eine Energieversorgung 505 auf und ist mit dem Speise- und Bediengerät 111 über eine HART-Leitung 504 verbunden.

Die Anschlussbox 100 weist neben dem Schnittstellenadapter 103 ein Datenkabel 113 auf, über welches sie mit dem Laptop 104 verbunden ist. Weiterhin weist die Anschlussbox 100 eine Funkschnittstelle zum drahtlosen Übertragen von Signalen zwischen der Box 100 und dem Feldgerät 109 auf. Auf diese Weise kann auf die Funkstrecke zwischen der Feldgerätefunkeinheit 502 und der bedien- bzw, auswerteseitigen Funkeinheit 503 zugegriffen werden, um beispielsweise das Feldgerät 109 zu parametrieren.

Fig. 6 zeigt eine schematische Darstellung eines Parametrierungs- und Datenaufzeichnungssystems gemäß einem weiteren Ausführungsbeispiel der vorliegenden Erfindung. Auch hier handelt es sich um eine drahtlose Datenübertragung. Die Anschlussbox 100 weist eine interne Stromversorgung in Form einer Batterie, einem Akku oder einer externe Energieversorgung auf. Der Anschluss an einen PC oder dergleichen ist nicht erforderlich, da die Anschlussbox an das Anzeige- und Bedienmodul 401 angeschlossen ist.

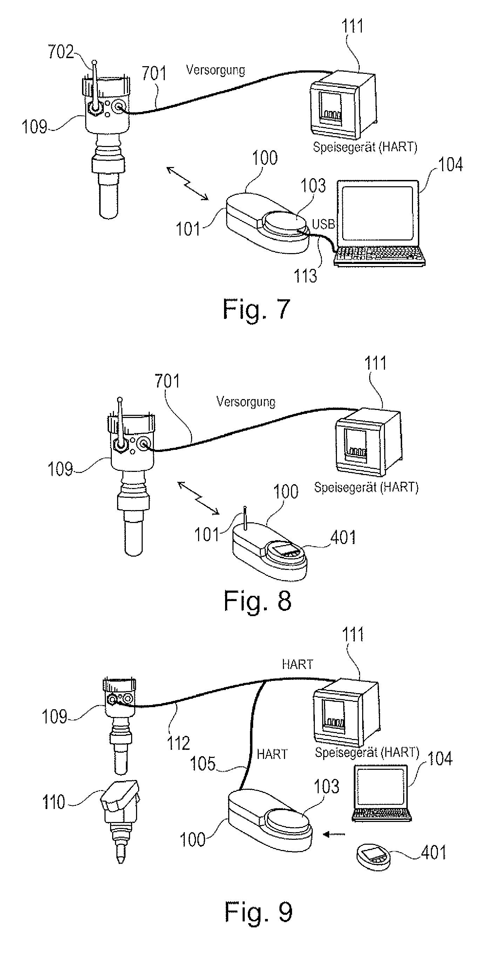

Fig. 7 zeigt eine schematische Darstellung eines Parametrierungs- und Datenaufzeichnungssystems gemäß einem Ausführungsbeispiel der vorliegenden Erfindung. Hier ist ein Funkmodul 702 im Sensor 109 integriert. Weiterhin ist der Sensor 109 über Versorgungsleitung 701 an ein Speisegerät 111, beispielsweise über eine HART-Leitung, angeschlossen.

Die Parametrierung des Sensors 109 erfolgt über Funk mit Hilfe der Anschlussbox 100, in welche ebenfalls ein entsprechendes Funkmodul integriert ist.

Fig. 8 zeigt eine schematische Darstellung eines Parametrierungs- und Datenaufzeichnungssystems gemäß einem weiteren Ausführungsbeispiel der vorliegenden Erfindung. Ein Laptop 104 oder dergleichen ist nicht erforderlich, weil die Anschlussbox 100 mit dem Anzeige- und Bediengerät 401 gekoppelt ist. Die Energieversorgung der Anschlussbox erfolgt über Batterie oder extern. Auch hier ist ein Funkmodul sowohl im Sensor als auch in der Anschlussbox 100 eingebaut.

Fig. 9 zeigt eine schematische Darstellung eines Parametrierungs- und Datenaufzeichnungssystems gemäß einem weiteren Ausführungsbeispiel der Erfindung. Wie in Fig. 9 zu erkennen, ist die Anschlussbox 100 über das HART-Kabel 105 an die HART-Leitung 112 zwischen dem Speisegerät 111 und dem Sensor 109 angeschlossen. Die Anschlussbox 100 weist eine interne Energieversorgung auf, so dass der analoge Messwert (analoger Stromwert) nicht verfälscht wird. Alternativ zum analogen HART-Signal kann der Multi-Drop-Mode (busfähig) verwendet werden. In diesem Fall ist keine interne Energieversorgung der Anschlussbox bzw. des Schnittstellenadapters 103 notwendig. Der Schnittstellenadapter 103 initiiert die Sensordatenaufzeichnung des Sensors 109. Weiterhin ist ein Speichermedium vorgesehen, welches sich entweder innerhalb der Anschlussbox 100 befindet, oder Teil des Schnittstellenadapters 103 ist. Auch kann ein externes Speichermedium angeschlossen werden. Auf diese Weise können Sensordaten über die Anschlussbox 100 aufgezeichnet werden. Die Datenaufzeichnung kann beispielsweise über ein Laptop 104 oder ein Bediengerät 401 hinsichtlich beispielsweise Startpunkt, Endpunkt und Aufzeichnungsintervall eingerichtet werden. Die über die Anschlussbox 100 aufgezeichneten Daten können anschließend beispielsweise über USB ausgelesen werden.

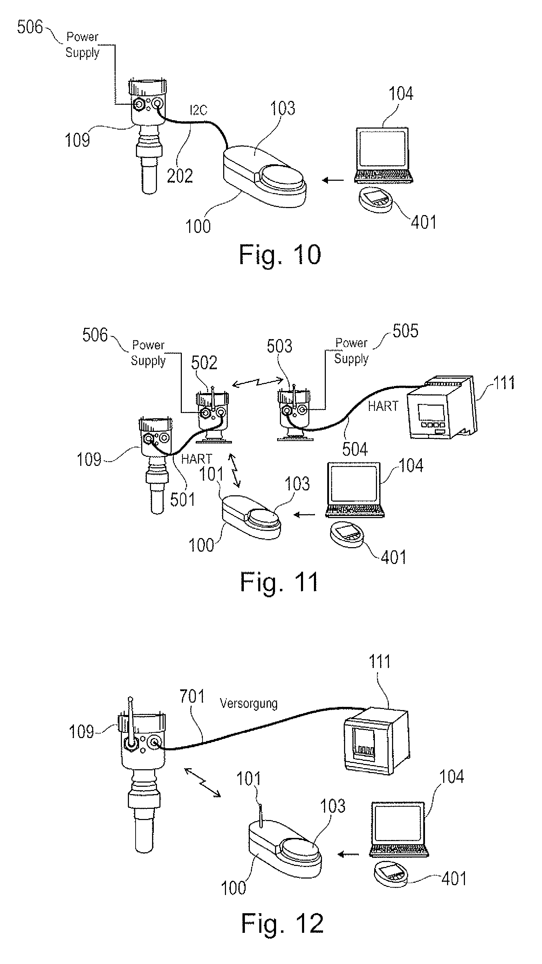

Fig. 10 zeigt eine schematische Darstellung eines Parametrierungs- und Datenaufzeichnungssystems gemäß einem weiteren Ausführungsbeispiel der vorliegenden Erfindung. Hier ist der Schnittstellenadapter 103 über eine I²C-Leitung 202 mit dem Sensor 109 verbunden, der wiederum an eine Energieversorgung 506 angeschlossen ist. Der Schnittstellenadapter 103 initiiert die Sensordatenaufzeichnung. Weiterhin wird der Schnittstellenadapter 103 vom Sensor mit Energie versorgt. Auch hier ist ein internes oder externes Speichermedium vorgesehen, um die Sensordaten aufzuzeichnen. Hierbei kann es sich beispielsweise um einen USB-Memory-Stick handeln. Das Speichermedium ist beispielsweise in der Anschlussbox oder im Schnittstellenadapter 103 integriert. Auch hier wird die Aufzeichnung über ein Laptop oder dergleichen 104 oder über das Bediengerät 401 eingerichtet. Ein Auslesen der aufgezeichneten Daten erfolgt beispielsweise über den USB-Anschluss des Schnittstellenadapters 103.

Fig. 11 zeigt eine schematische Darstellung eines Parametrierungs- und Datenaufzeichnungssystems gemäß einem weiteren Ausführungsbeispiel der vorliegenden Erfindung. Hierbei handelt es sich um eine Funkübertragung, wie bereits in den Fig. 5 bis 8 beschrieben. Der Schnittstellenadapter 103 ist über ein in der Anschlussbox 100 angebrachtes Funkmodul und dem Funkmodul 502 mit dem Sensor 109 verbunden. Der Schnittstellenadapter 103 initiiert die Sensordatenaufzeichnung und wird von einer Batterie, einem Akku oder einem externen Speisegerät mit Energie versorgt. Wiederum ist ein internes oder externes Speichermedium vorgesehen, um die Sensordaten aufzuzeichnen. Das Einrichten der Aufzeichnung erfolgt wie in den Fällen der Fig. 9 und 10.

Fig. 12 zeigt ein weiteres Ausführungsbeispiel eines Parametrierungs- und Datenaufzeichnungssystems. Die drahtlose Kommunikation zwischen Anschlussbox 100 und Sensor 109 entspricht dem in Fig. 7 beschriebenen Fall. Auch hier initiiert der Schnittstellenadapter 103 die Sensordatenaufzeichnung und wird von einer Batterie, einem Akku oder extern von einem Speisegerät 111 mit Energie versorgt. Zur Aufzeichnung der Sensordaten ist auch hier ein Speichermedium in der Anschlussbox oder im Schnittstellenadapter 103 integriert oder extern angeschlossen. Auch hier wird das Laptop 104 oder die Bedieneinheit 401 zum Einrichten der Datenaufzeichnung und zum Auslesen der gespeicherten Daten verwendet.

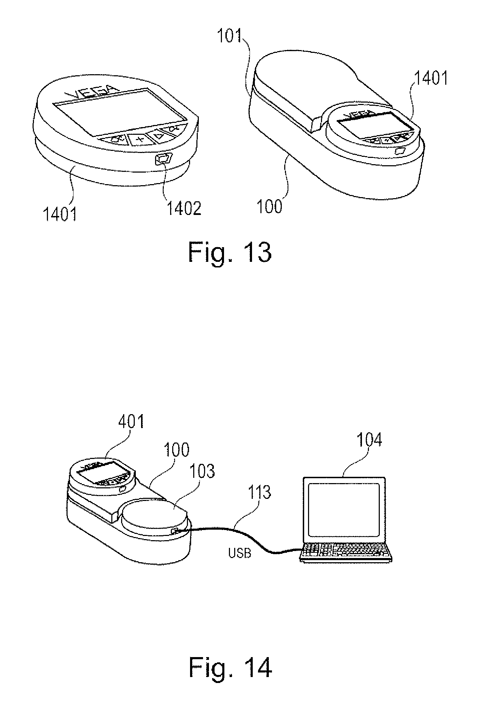

Fig. 13 zeigt eine schematische Darstellung eines Parametrierungs- und Dalenaufzeichnungssystems gemäß einem weiteren Ausführungsbeispiel der vorliegenden Erfindung. Hierfür ist die Anschlussbox 100 derart ausgeführt, dass an den Schnittstellenanschluss 102 (siehe Fig. 15) eine kombinierte Bedien- und Kommunikationseinheit 1401 angeschlossen werden kann. Bei der kombinierten Bedien- und Kommunikationseinheit 1401 handelt es sich um eine Kombination aus einer Bedieneinheit 401 und einem Schnittstellenadapter 103. Bezugszeichen 1402 zeigt den USB-Anschluss.

Durch die Kombination von Bedieneinheit und Kommunikationseinheit kann eine Bedienung bzw. Ansteuerung des Sensors von der Anschlussbox 100 aus vorgenommen werden, bei gleichzeitiger Möglichkeit, die Anschlussbox an ein Laptop anzuschließen, um beispielsweise Daten auszulesen.

Fig. 14 zeigt eine schematische Darstellung eines Parametrierungs- und Datenaufzeichnungssystems gemäß einem weiteren Ausführungsbeispiel der vorliegenden Erfindung. Die Anschlussbox 100 weist einen zweiten Schnittstellenanschluss auf, an den die Bedieneinheit 401 angeschlossen werden kann, welcher auch zur Datenspeicherung einsetzbar ist. Somit können die Messdaten in der Bedieneinheit 401 zwischengespeichert werden und nachfolgend kann dann ein Auslesen der Messdaten über den Schnittstellenadapter 103 durch die Ausleseeinheit 104 erfolgen.

Fig. 15 zeigt einen Adapterstecker 108 gemäß einem Ausführungsbeispiel der vorliegenden Erfindung in vier unterschiedlichen perspektivischen Ansichten 1501, 1502, 1503, 1504.

Fig. 16 zeigt den Adapterstecker der Fig. 15 in vier weiteren schematischen Darstellungen. 1606 zeigt eine Frontansicht, 1607, 1608, 1609 zeigen drei Seitenansichten des Adaptersteckers 108 (von oben, von der Seite und von unten) und 1610 zeigt eine Rückansicht des Adaptersteckers 108.

Der Adapterstecker 108 weist vorderseitig verschiedene Kontaktbereiche 1602, 1603, 1604, 1605 zum Anschluss an ein Serie 50-Feldgerät auf. Um zu verhindern, dass der Adapterstecker 108 falsch herum in das Feldgerät eingesteckt wird, ist beispielsweise eine Nase 1601 vorgesehen.

1610 zeigt eine schematische Darstellung des Adaptersteckers 108 in Rückansicht. Auch hier sind vier Anschlussbereiche 1703, 1704, 1705, 1706 zum Anschluss des Adaptersteckers an einen I²C-Stecker des I²C-Kabels 202 der Anschlussbox 100 vorgesehen. Weiterhin ist auch hier eine Verdrehsicherung eingebaut in Form von vier schwalbenschwanzartigen oder anderweitig geformten Einbuchtungen 1701 auf einer ersten Seite und vier gebogenen Auswölbungen 1702 auf einer zweiten Seite des Adaptersteckers 108. Die Auswölbungen 1701, 1702 können auch andere Formen aufweisen, müssen aber mit entsprechenden Einbuchtungen einer Gegenbuchse korrespondieren.

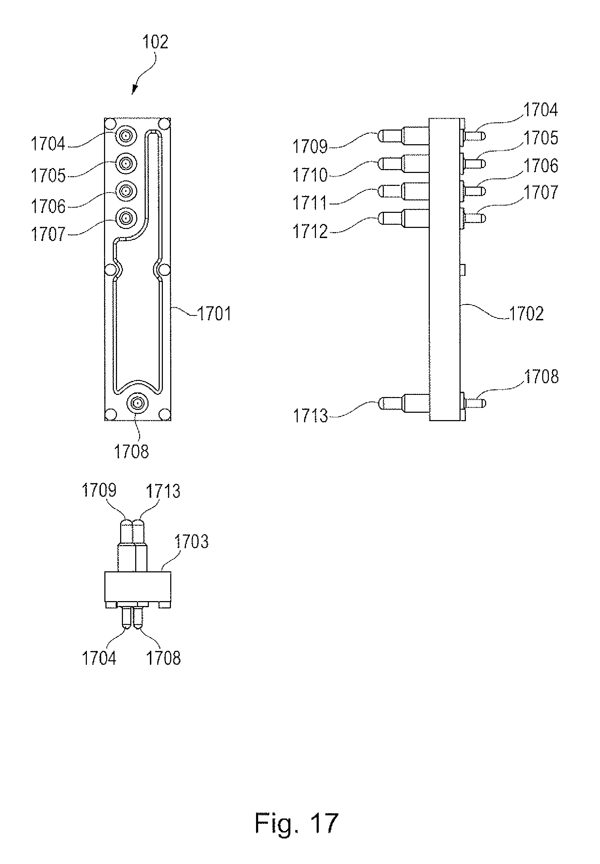

Fig. 17 zeigt drei schematische Darstellungen des Schnittstellenanschlusses 102, 1901 mit seinen Federkontakten 1704, 1705, 1706, 1707, 1708 und 1709, 1710, 1711, 1712, 1713.

Die Darstellung 1701 zeigt die Unterseite des Schnittstellenanschlusses 102, 1901, die Darstellung 1702 zeigt eine Seitenansicht und 1703 zeigt eine Frontalansicht.

Die acht Kontaktstifte 1704 bis 1713 sind jeweils mit entsprechenden Federelementen (nicht gezeigt in Fig. 17) gekoppelt und können in den Grundkörper des Schnittstellenanschlusses 102 zumindest teilweise hineingedrückt werden (entgegen den Federkräften). Wenn nun ein Schnittstellenadapter 103 auf die Anschlussbox 100 aufgeschraubt wird, so werden die oberen Kontaktstifte 1709 bis 1713 gegen entsprechende Kontaktflächen des Schnittstellenadapters 103 gepresst, so dass ein guter, elektrisch leitfähiger Kontakt entsteht.

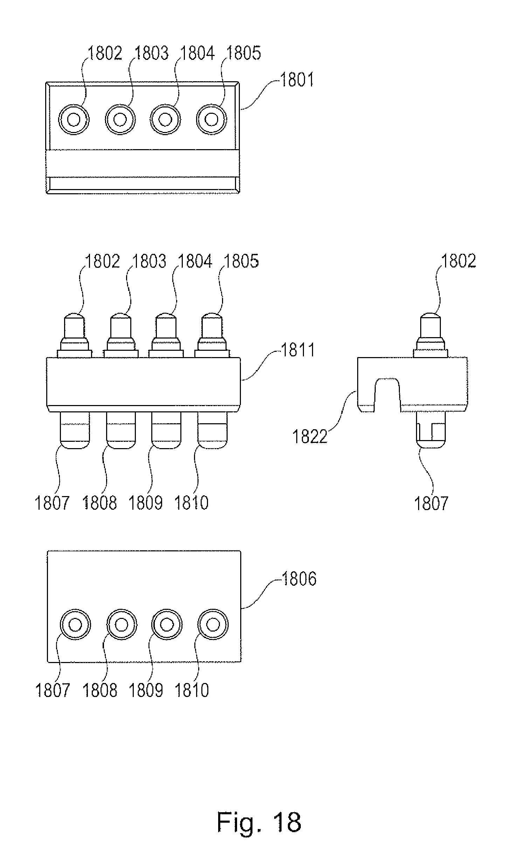

Fig. 18 zeigt eine schematische Detailansicht der Federkontakte 102, 1901 das Sensors 109 oder des Schnittstellenadapters (103). 1801 zeigt eine Draufsicht auf die Kontakte 1802, 1803, 1804, 1805. 1806 zeigt eine Draufsicht auf die Kontakte 1807, 1808, 1809, 1810. 1811 zeigt eine erste Seitenansicht der Federkontakte und 1822 zeigt eine zweite Seitenansicht der Federkontakte mit einer um 90° versetzten Blickrichtung.

Die Federkontakte weisen beispielsweise Federelemente auf, durch welche die Kontaktstifte 1802 bis 1805 bzw. 1807 bis 1810 an die korrespondierenden Kontaktflächen gedrückt werden, wenn der Schnittstellenadapter 103 in die Anschlussbox 100 eingeschraubt wird.

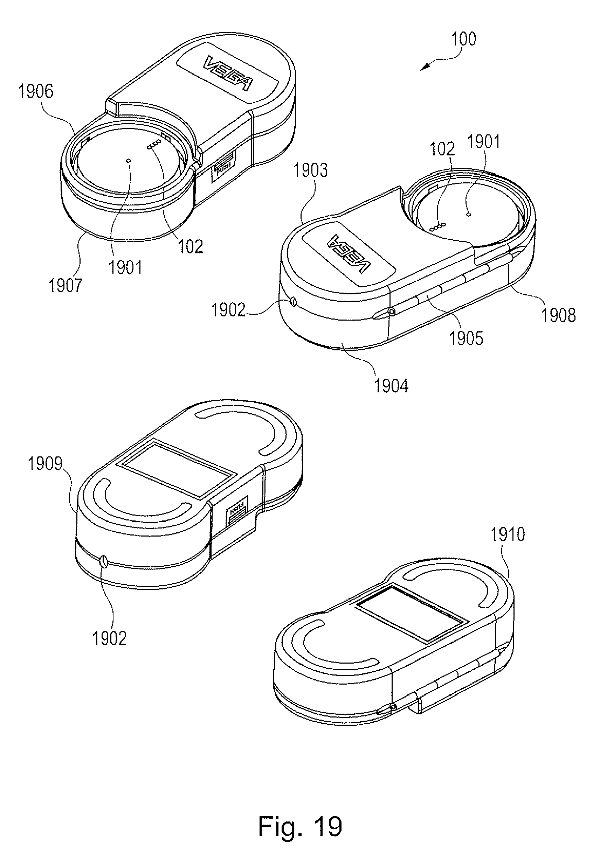

Fig. 19 zeigt eine schematische Darstellung 1907, 1908, 1909 der Anschlussbox 100, von vier verschiedenen Richtungen aus betrachtet. Die Anschlussbox 100 weist einen Anschlussbereich 1906 zur Aufnahme eines Schnittstellenadapters 103 auf. Um den Schnittstellenadapter 103 an die Anschlussbox anzuschließen, sind Schnittstellenanschlüsse 102, 1901 vorgesehen, welche beispielsweise in Form von Federkontakten ausgeführt sind. Schnittstellenanschlüsse 102 dienen der Übertragung eines I²C-Signals, der Schnittstellenanschluss 1901 (in Kombination mit einem der Schnittstellenanschlüsse 102) dient der Übertragung eines HART-Signals.

Weiterhin weist die Box 100 eine Kabeldurchführung 1902 auf, durch welche die HART-Leitung 105 oder das I²C-Bus-Kabel 106 geführt werden kann. Die Box 100 weist ein Deckelelement 1903 und ein Basiselement 1904 auf, welche über ein Scharnier 1905 miteinander verbunden sind, so dass die Box 100 aufgeklappt werden kann.

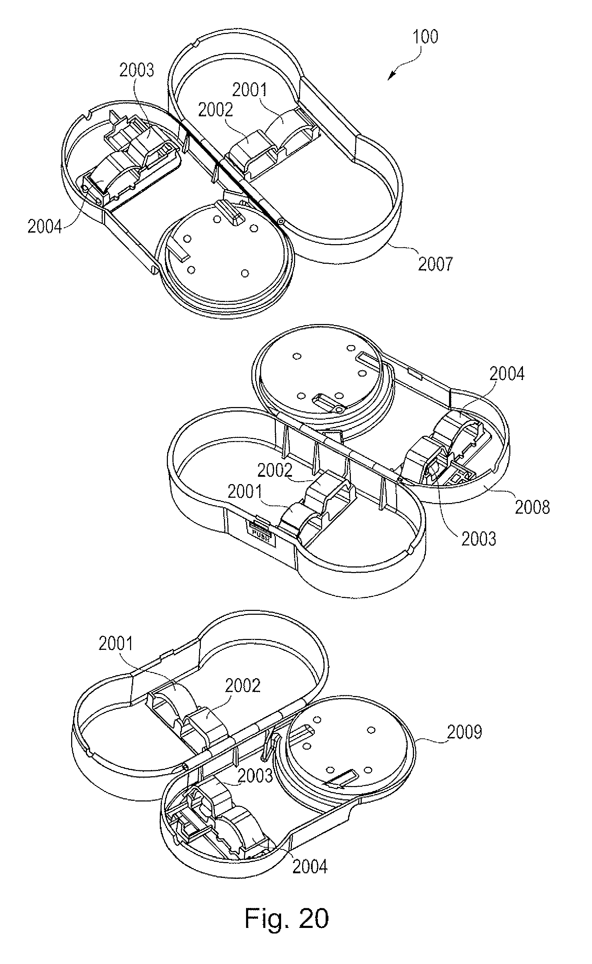

Fig. 20 zeigt drei weitere perspektivische Darstellungen 2007, 2008, 2009 der Anschlussbox 100 in aufgeklapptem Zustand. Es sind Halteelemente 2001, 2001, 2003, 2004 vorgesehen, um die entsprechenden Anschlusskabel 105, 106, 107 und den Adapterstecker 108 aufzunehmen.

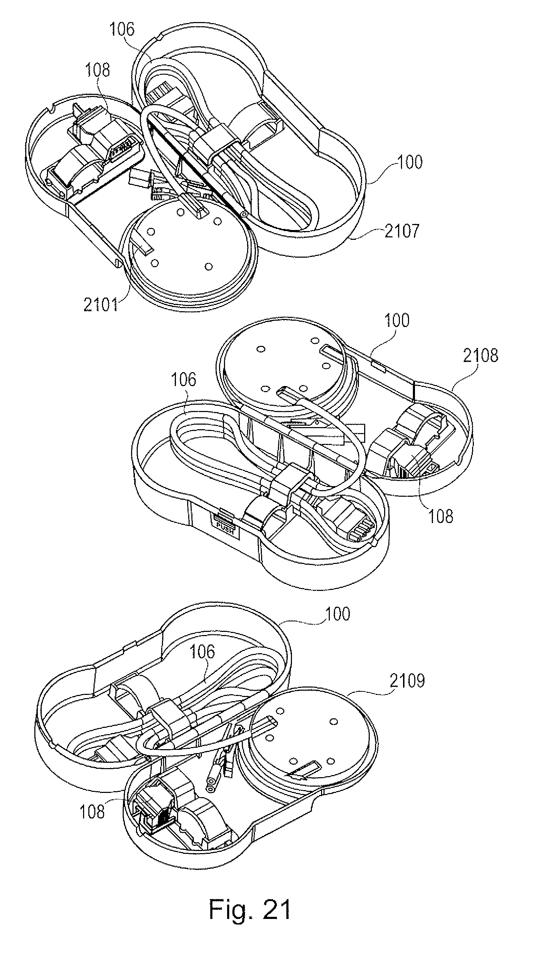

Fig. 21 zeigt die Anschlussbox 100 in drei weiteren perspektivischen Darstellungen 2107, 2108, 2109 und mit einem I²C-Bus-Kabel 106 und einem Anschlussstecker 108.

Weiterhin kann ein HART-Kabel 105 (nicht dargestellt in Fig. 21) vorgesehen sein, welches beispielsweise aus der Buchse 2101 austritt und einen Anschluss an eine HART-Leitung eines Feldgerätes ermöglicht.

Fig. 22 zeigt eine schematische Darstellung einer Anschlussbox 100 gemäß einem weiteren Ausführungsbeispiel der vorliegenden Erfindung. Die Anschlussbox 100 weist Schleifkontakte 102 zum Anschluss an einen Schnittstellenadapter auf. Eine Detaildarstellung der Schleifkontakte 102 ist in Fig. 17 gezeigt. Weiterhin weist die Anschlussbox 100 ein HART-Kabel 105 auf, welches einen Feldgeräteanschluss 101 bereitstellt. Das HART-Kabel 105 weist zwei Anschlüsse 1501, 1502 auf, welche beispielsweise in Form von Klemmen oder Steckern ausgebildet sind. Über diese beiden Anschlüsse 1501, 1502 ist das HART-Kabel 105 an ein Feldgerät anschließbar.

Fig. 23 zeigt eine weitere schematische Darstellung einer Anschlussbox 100 mit einem HART-Kabel 105 mit den beiden Steckern 1501, 1502, und einem I²C-Kabel 106. Weiterhin sind die Schnittstellenanschlüsse 102 und 1901 vorgesehen.

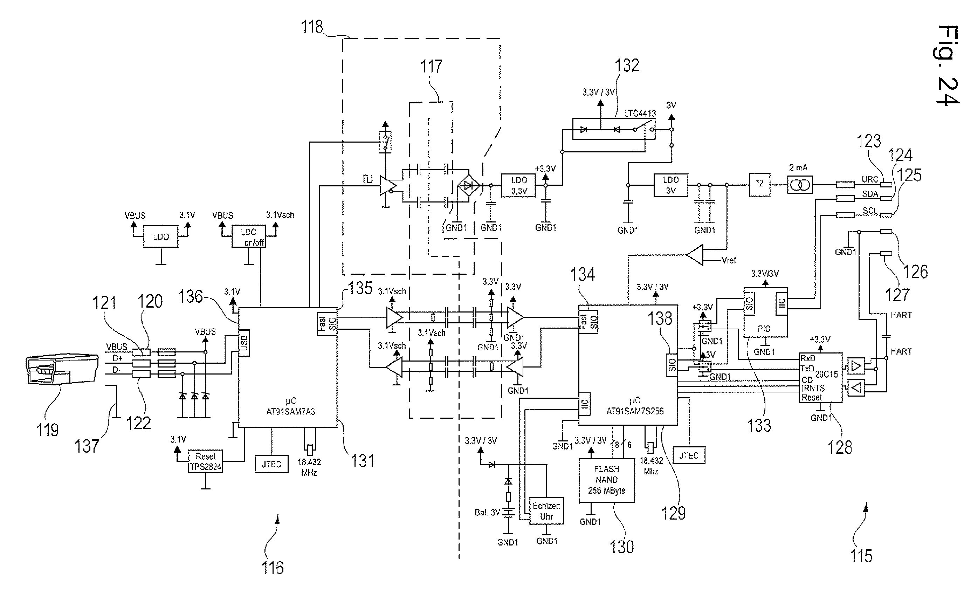

Fig. 24 ein Blockschaltbild eines Schnittstellenadapters gemäß einem Ausführungsbeispiel der vorliegenden Erfindung. Der Schnittstellenadapter 103 weist eine Feldgeräteschnittstelle 115 in einem ersten Bereich des Schnittstellenadapters und eine Bediengeräteschnittstelle 116 in einem zweiten Bereich des Schnittstellenadapters auf. Die Feldgeräteschilittstelle 115 besitzt fünf Anschlusskontakte 123, 124, 125, 126, 127, Bei den Anschlusskontakten 123, 124, 125 handelt es sich um I²C-Anschlüsse für einen I²C-Bus. Beim Anschlusskontakt 127 handelt es sich um einen HART-Anschluss für einen HART-Bus und bei dem Anschlusskontakt 126 handelt es sich um eine gemeinsame Erdung für den HART-Anschluss 127 und die I²C-Anschlüsse 123 bis 125.

Weiterhin ist ein spezieller HART-Baustein 128 vorgesehen, welcher zur Umwandlung der Prozessorsignale in die FSK-Signale für HART dient. Der HART-Baustein 128 ist mit der Erde 126 und dem HART-Ausgang 127 verbunden. Auf der anderen Seite ist der HART-Baustein 128 an den Mikroprozessor 129 angeschlossen, welcher die HART- bzw. I²C-Buskommunikation steuert. Der Mikroprozessor 129 dient weiterhin der Spannungs- bzw. Leistungsüberwachung und regelt die Speicherung von Daten (beispielsweise Messdaten des Feldgeräts) im Flash NAND 130. Der Flash NAND 130 weist beispielsweise eine Speicherkapazität von 256 Megabyte auf. Natürlich sind auch andere Speichergrößen möglich.

Der PIC-Baustein 133 dient der Umwandlung von seriellen Signalen (SIO) in I²C. Hierfür ist der PIC-Baustein 133 einerseits mit dem SIO-Ausgang 138 des Mikroprozessors 129 und andererseits mit den SDA- bzw. SCL-Anschlüssen 124, 125 des I²C-Ausgangs des Schnittstellenadapters verbunden.

Über die Fast SIO 134 tauscht der Prozessor 129 Daten mit dem USB-seitigen Prozessor 131 (welcher sich im zweiten Bereich befindet) aus.

Bei den Daten, die zwischen den beiden Fast SIO Ausgängen 134, 135 der beiden Prozessoren 131, 129 ausgetauscht werden, handelt es sich z.B. um Daten, wie sie von Standardschnittstellen geliefert werden.

Der USB-seitige Prozessor 131 ist über den USB-Anschluss 136 mit den drei USB-Kontakten 120 (VBUS), 121 (D+) und 122 (D-) verbunden. Diese drei Kontakte 120 bis 122 können zusammen mit einem Erdungskontakt 137 an der USB-Buchse 119 von außen abgegriffen werden.

Weiterhin ist eine Potentialtrennung 117 zwischen dem ersten, I²C-seitigen bzw. HART-seitigen Bereich und dem zweiten, USB-seitigen Bereich vorgesehen. Die Potentialtrennung kann kapazitiv (wie in Fig. 24 gezeigt) über einzelne Kondensatoren oder aber auch induktiv (nicht dargestellt in Fig. 24) erfolgen.

Weiterhin ist ein DC/DC-Wandler 118 vorgesehen, welcher einerseits an den USB-seitigen Prozessor 131 und andererseits an die Schaltung 132 angeschlossen ist.

Bei der Schaltung 132 handelt es sich um eine Schaltung, welche dafür sorgt, dass der Schnittstellenadapter im Falle einer USB-Spannungsversorgung (von extern über USB-Buchse 119) ausschließlich Über den USB-Anschluss 119 mit Energie versorgt wird. Weiterhin sorgt das Bauteil 132 dafür, dass, wenn der Schnittstellenadapter eine Datenloggfunktion ausführt, nur die für die Datenloggfunktion benötigten Bauteile (welche sich im ersten Bereich 115 befinden) mit Energie versorgt werden. Auf diese Weise kann Energie eingespart werden.

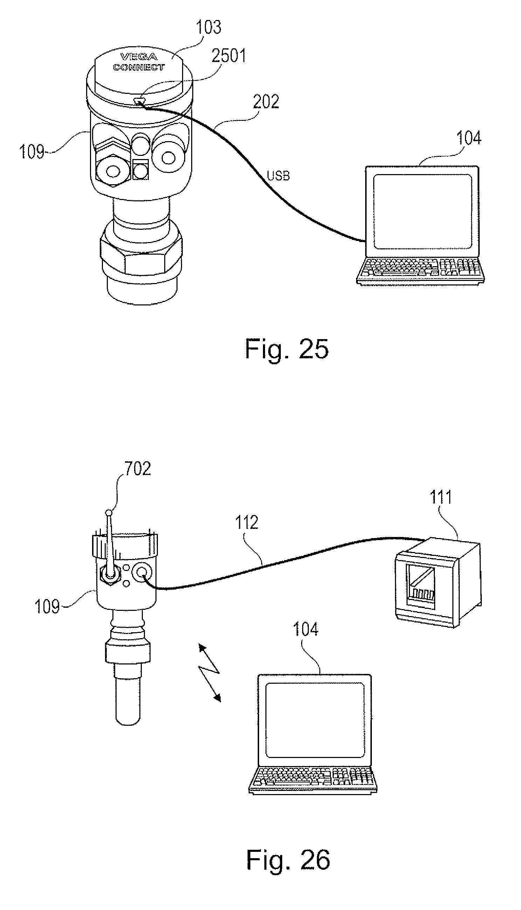

Fig. 25 zeigt eine weitere Anwendung des Schnittstellenadapters 103 zur Parametrierung oder Sensordatenaufzeichnung mittels einer USB-Datenleitung 202 und einem Laptop 104. Der Schnittstellenadapter 103 ist hierfür direkt auf den Füllstandsensor 109 aufgesetzt, so dass ein Kontakt zwischen der Feldgeräteschnittstelle 115 des Schnittstellenadapters 103 und der entsprechenden Feldgeräteschnittstelle des Sensors 109 hergestellt ist. Über den USB-Anschluss 2501 ist der Schnittstellenadapter 103 mit dem Laptop 104 verbunden.

Fig. 26 zeigt das Parametrieren oder Auslesen eines Sensors 109 über eine Funkkommunikation zwischen dem Sensor 109 und einem Laptop 104 (oder einem PDA oder Mobiltelefon oder dergleichen). Hierfür weist der Sensor 109 eine Funkschnittstelle mit Antenne 702 auf. Eine entsprechende Funkschnittstelle befindet sich im Laptop 104. Zur Energieversorgung ist der Sensor 109 über Kabel 112 mit einem Speisegerät 111 verbunden.

Das Gerät 104 kann zur Bereitstellung von redundanten Funktionen, welche beispielsweise auch vom Kontrollraum aus bereitgestellt werden, ausgeführt sein. Weiterhin kann das mobile Gerät 104 auch zur Bereitstellung nicht-redundanter Funktionen ausgeführt sein, welche ansonsten durch kein anderes Gerät bereitgestellt werden.

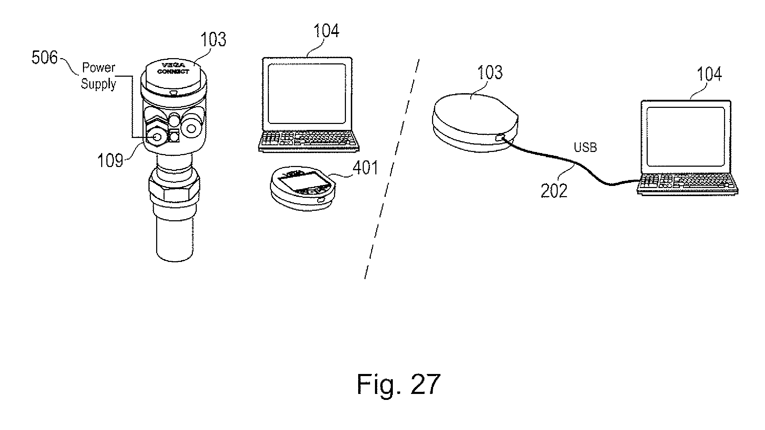

Fig. 27 zeigt ein Beispiel einer Sensordatenaufzeichnung gemäß einem Ausführungsbeispiel der vorliegenden Erfindung, bei welcher die Sensordaten über einen längeren Zeitraum von beispielsweise mehreren Monaten direkt am Sensor durch den aufgesetzten Schnittstellenadapter 103 aufgezeichnet werden. Der Schnittstellenadapter 103 ist hierfür direkt auf den Sensor aufgesetzt und an diesen angeschlossen und wird vom Sensor 109 mit Energie versorgt. Der Schnittstellenanschluss 103 initiiert bzw. triggert die Sensordatenaufzeichnung. Hierfür ist der Schnittstellenadapter 103 zu einem früheren Zeitpunkt beispielsweise über die Bedieneinheit 401 oder das Laptop 104 entsprechend parametriert worden.

Der Schnittstellenadapter 103 weist hierfür ein internes oder externes Speichermedium, beispielsweise in Form eines Speicherchips oder eines extern einsteckbaren USB-Memory-Sticks, auf.

Wie bereits erwähnt, kann die Datenaufzeichnung über das Laptop 104 oder das Bediengerät 401 bezüglich Start, Ende und Aufzeichnungsintervall eingerichtet werden. Während oder nach der Datenaufzeichnung kann der Schnittstellenadapter 103 über USB 202 ausgelesen werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Schnittstellenadapter (103) für ein Feldgerät, der Schnittstellenadapter (103) aufweisend:
eine Feldgeräteschnittstelle (115) zum Anschluss des Schnittstellenadapters (103) an ein Feldgerät (109);
eine Bediengeräteschnittstelle (116) zum Anschluss des Schnittstellenadapters (103) an ein mobiles Bediengerät (104);
wobei der Schnittstellenadapter (103) zur Übertragung von Daten zwischen dem Feldgerät (109) und dem mobilen Bediengerät (104) ausgeführt ist; und
wobei das Feldgerät ein Füllstandmessgerät oder ein Druckmessgerät ist.

2. Schnittstellenadapter (103) nach Anspruch 1,
wobei der Schnittstellenadapter (103) für die Datenübertragung zur Wandelung eines Signals vom Feldgerät (109) in ein USB-Signal für das Bediengerät (104) ausgeführt ist; und
wobei das Signal vom Feldgerät (109) ausgewählt ist aus der Gruppe bestehend aus einem HART-Signal, einem I²C Signal, einem Profibus-Signal, einem Fieidbus Foundation Signal, einem 4...20 mA Signal, einem VEGA VBUS-Signal und einem Schaltsignal.

3. Schnittstellenadapter (103) nach Anspruch 1 oder 2, weiterhin aufweisend:
einen Speicher zum Zwischenspeichern der zu übertragenden Daten.

4. Schnittstellenadapter (103) nach einem der vorhergehenden Ansprüche, weiterhin aufweisend:
eine Anzeige- und Bedieneinheit (401), die in dem Schnittstellenadapter (103) integriert ist.

5. Schnittstellenadapter (103) nach einem der vorhergehenden Ansprüche,
wobei die Daten Parametrierungsdaten zur Parametrierung für das Feldgerät (109) aufweisen; und
wobei der Schnittstellenadapter (103) zur Übertragung der Parametrierungsdaten von dem Bediengerät (104) an das Feldgerät (109) ausgeführt ist.

6. Schnittstellenadapter (103) nach einem der vorhergehenden Ansprüche,
wobei die Daten Messdaten des Feldgeräts aufweisen, und
wobei der Schnittstellenadapter (103) zur Übertragung der Messdaten von dem Feldgerät (109) an das Bediengerät (104) ausgeführt ist.

7. Schnittstellenadapter (103) nach einem der vorhergehenden Ansprüche, weiterhin aufweisend:
eine Funkschnittstelle zum drahtlosen Übertragung des Signals zwischen dem Schnittstellenadapter (103) und dem Feldgerät (109).

8. Schnittstellenadapter (103) nach einem der vorhergehenden Ansprüche,
wobei der Schnittstellenadapter (103) Federkontakte zum Anschluss an das Feldgerät (109) aufweist.

9. Parametrierungs- und Datenaufzeichnungssystem für ein Feldgerät, aufweisend:
eine Anschlussbox (100);
einen Schnittstellenadapter (103) mit einer Feldgeräteschnittstelle (115) zum Anschluss an die Anschlussbox (100);
wobei der Schnittstellenadapter (103) und die Anschlussbox (100) zur Übertragung von Daten zwischen dem Feldgerät (109) und einem mobilen Bediengerät (104) ausgeführt sind; und
wobei das Feldgerät ein Füllstandmessgerät oder ein Druckmessgerät ist.

10. Parametrierungs- und Datenaufzeichnungssystem nach Anspruch 9,
wobei der Schnittstellenadapter (103) für die Datenübertragung zur Wandelung eines Signals vom Feldgerät (109) in ein USB-Signal für das Bediengerät (104) ausgeführt ist; und
wobei das Signal vom Feldgerät (109) ausgewählt ist aus der Gruppe bestehend aus einem HART-Signal, einem I²C Signal, einem Profibus-Signal, einem Fieldbus Foundation Signal, einem 4...20 mA Signal, einem VEGA VBUS-Signal und einem Schaltsignal.

11. Parametrierungs- und Datenaufzeichnungssystem nach Anspruch 9 oder 10,
wobei die Daten Parametrierungsdaten zur Parametrierung für das Feldgerät aufweisen; und
wobei das System zur Übertragung der Parametrierungsdaten von dem Bediengerät (104) über den Schnittstellenadapter (103) und die Anschlussbox (100) an das Feldgerät (109) ausgeführt ist.

12. Parametrierungs- und Datenaufzeichnungssystem nach einem der vorhergehenden Ansprüche,
wobei die Daten Messdaten des Feldgeräts aufweisen, und
wobei das System zur Übertragung der Messdaten von dem Feldgerät (109) über die Anschlussbox (100) und den Schnittstellenadapter (103) an das Bediengerät (104) ausgeführt ist.

13. Parametrierungs- und Datenaufzeichnungssystem nach einem der vorhergehenden Ansprüche,
wobei der Schnittstellenadapter (103) eine Bediengeräteschnittstelle (116) aufweist;
wobei die Bediengeräteschnittstelle (116) zum Anschluss des Schnittstellenadapters (103) an das Bediengerät (104) ausgebildet ist; und
wobei die Anschlussbox (100) einen Feldgeräteanschluss (101) zum Anschluss der Box (100) an das Feldgerät (109) aufweist.

14. Parametrierungs- und Datenaufzeichnungssystem nach einem der vorhergehenden Ansprüche,
wobei der Schnittstellenadapter (103) einen USB-Anschluss zum Anschluss an das Bediengerät (104) aufweist.

15. Parametrierungs- und Datenaufzeichnungssystem nach einem der vorhergehenden Ansprüche,
wobei die Anschlussbox (100) einen ersten Schnittstellenanschluss (102) zum direkten Anschluss der Box (100) an den Schnittstellenadapter (103) aufweist.

16. Parametrierungs- und Datenaufzeichnungssystem nach einem der vorhergehenden Ansprüche,
wobei die Anschlussbox (100) einen zweiten Schnittstellenanschluss zum direkten Anschluss der Box (100) an ein Anzeige- und Bediengerät (401) aufweist.

17. Parametrierungs- und Datenaufzeichnungssystem nach einem der Ansprüche 13 bis 16,
wobei der Feldgeräteanschluss (101) zum Anschluss an eine HART-Leitung (112) ausgeführt ist.

18. Parametrierungs- und Datenaufzeichnungssystem nach einem der Ansprüche 13 bis 17,
wobei der Feldgeräteanschluss (101) zum Anschluss an einen I²C-Bus ausgeführt ist.

19. Parametrierungs- und Datenaufzeichnungssystem nach einem der Ansprüche 13 bis 18,
wobei der Feldgeräteanschluss (101) einen Adapterstecker (108) zum Anschluss an ein Serie 50-Gerät der Firma VEGA aufweist.

20. Parametrierungs- und Datenaufzeichnungssystem nach Anspruch 19,
wobei der Adapterstecker (108) derart kodierte Anschlüsse aufweist, dass ein falsches Anschließen des Adapterstecker (108) an das Serie 50-Gerät verhindert wird.

21. Parametrierungs- und Datenaufzcichnungssystem nach einem der vorhergehenden Ansprüche, weiterhin aufweisend:
eine Energieversorgung zur autarken Versorgung des Schnittstellenadapters (103) mit elektrischer Energie.

22. Parametrierungs- und Datenaufzcichnungssystem nach Anspruch 21,
wobei die Energieversorgung einen aufladbaren Akkumulator und ein Solarzellenmodul aufweist;
wobei das Solarzellenmodul zum Aufladen des Akkumulators ausgeführt ist.

23. Parametrierungs- und Datenaufzeichnungssystem nach einem der vorhergehenden Ansprüche,
wobei die Anschlussbox (100) einen von außen zugänglichen Hohlraum aufweist, der zur Lagerung von einem HART-Kabel (105), einem I²C-Bus-Kabel (106), einem USB-Kabel (107) und einem Adapterstecker (108) ausgeführt ist.

24. Parametrierungs- und Datenaufzeichnungssystem nach einem der vorhergehenden Ansprüche, weiterhin aufweisend:
eine Funkschnittstelle zum drahtlosen Übertragung des Signals zwischen dem Parametrierungs- und Datenaufzeichnungssystem und dem Feldgerät (109).

25. Parametrierungs- und Datenaufzeichnungssystem nach einem der Ansprüche 15 bis 24,
wobei der Schnittstellenanschluss (102) Schleifkontakte zum Anschluss der Box (100) an den Schnittstellenadapter (103) aufweist.

26. Parametrierungs- und Datenaufzeichnungssystem nach einem der vorhergehenden Ansprüche,
wobei der Schnittstellenadapter (103) eine Anzeige- und Bedieneinheit (401) aufweist, die in dem Schnittstellenadapter (103) integriert ist.

27. Verwendung eines Parametrierungs- und Datenaufzeichnungssystem nach einem der Ansprüche 9 bis 26 zur Übertragung von einem Signal zwischen einem Feldgerät (109) und einem Bediengerät (104);
wobei das Feldgerät ein Füllstandmessgerät oder ein Druckmessgerät ist.

28. Verfahren zur Übertragung von einem Signal zwischen einem Feldgerät (109) und einem Bediengerät (104) mit einem Parametrierungs- und Datenaufzeichnungssystem nach einem der Ansprüche 9 bis 26, das Verfahren aufweisend die Schritte:
Anschluss eines Schnittstellenadapters (103) mit einer Feldgeräteschnittstelle (115) an eine Anschlussbox (100);
Übertragung von Daten zwischen dem Feldgerät (109) und dem Bediengerät (104) über den Schnittstellenadapter (103) und die Anschlussbox (100);
wobei das Feldgerät ein Füllstandmessgerät oder ein Druckmessgerät ist.
